# EUROPEAN PATENT SPECIFICATION

(11) **EP 2 096 800 B1**
(45) Date of publication and mention of the grant of the patent: **22.09.2010**
(21) Application number: 09153939.5
(22) Date of filing: 27.02.2009
(51) Int. Cl.: H04L 12/437, H04L 12/56

(54) **Layer-2 ring network system and management method therefor**
Schicht-2-Ringnetzsystem und Verwaltungsverfahren dafür
Système de réseau local en boucle de couche 2 et son procédé de gestion

(30) Priority: 28.02.2008 JP 2008047737
(43) Date of publication of application: 02.09.2009
(73) Proprietor: NEC Corporation, Tokyo 108-8001 (JP)
(72) Inventor: Ogura, Naoto, Tokyo (JP)
(74) Representative: Betten & Resch

(56) References cited:
- WO-A-03/077459
- US-A1- 2005 207 348
- US-B1- 6 766 482

## Description

### REFERENCE TO RELATED APPLICATION

This application is based upon and claims the benefit of the priority of Japanese patent application No. 2008-047737, filed on February 28, 2008 and published on September 9, 2009 under publication number JP 2003 206851

.

### TECHNICAL FIELD

The present invention relates to a network system and management method therefor, and particularly to a layer 2 ring network system and management method therefor.

### BACKGROUND

Multiple Spanning Tree Protocol (abbreviated as MSTP) is a protocol for controlling a layer 2 multi-ring network. MSTP (standardized as IEEE 801.1s) defines an STP (Spanning Tree Protocol) tree as an instance and configures one instance for a plurality of VLANs (Virtual Local Area Networks). One problem with the MSTP is a slow convergence time.

Multi-ring network control employing a ring protocol is utilized to cope with this problem.

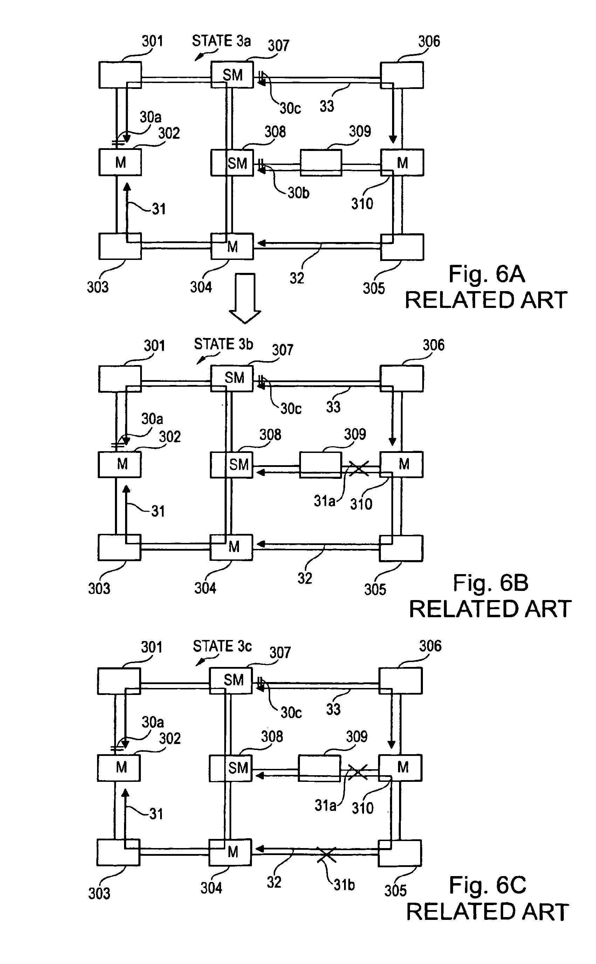

As a technique for managing a layer 2 network having a multi-ring configuration, for instance, a technique in which the network is managed by combining rings and arcs, as shown in FIGS. 6A to 6C, is known. In the example shown in FIGS. 6A to 6C, three rings are managed by classifying them into one ring and two arcs.

However, in the management technique shown in FIGS. 6A to 6C, when multi-link failures occur, there are occasions where failure recovery might not be possible. This will be described in detail below.

In a state 3a shown in FIG. 6A, a ring domain 31 is composed by layer 2 switches 301, 302, 303, 304, 307, and 308 to from a ring. Further, a ring domain 32 is composed by layer 2 switches 304, 305, 310, 309, and 308 to form an arc. Similarly, a ring domain 33 is composed by layer 2 switches 306, 307, and 310 to form an arc.

Each of the ring domains 32 and 33 which are managed as arcs, monitors the state of the arc by performing health check between the layer 2 switches on both ends of the associated arc, and each ring domain manages itself independently (see the state 3a). For instance, health check is performed between the layer 2 switches 304 and 308 on both ends of the arc of the ring domain 32, and health check is performed between the layer 2 switches 307 and 310 on both ends of the arc of the ring domain 33.

When a failure occurs in the arc, the ring domain open a blocking port (block port) managed by the ring domain. When a failure 31a occurs in the link between the layer 2 switches 309 and 310 in the ring domain 32 which is managed in the arc (a state 3b in FIG. 6B), the layer 2 switch 308 opens a blocking port 30b, which has been configured as a port to the layer 2 switch 309, secures a path, and recovers the failure.

Further, when another failure 31b occurs in the link between the layer 2 switches 304 and 305 in the ring domain 32 (a state 3c in FIG. 6C), since the ring domain 33 cannot detect this failure, a blocking port 30c is not opened and remains blocked.

As a result, even though the paths of the layer 2 network still exist, the layer 2 switches 305, 306, and 310 cannot recover the communication paths to other layer 2 switches. Therefore, the path between the layer 2 switches 306 and 307 is blocked by the blocking port 30c, the link between the layer 2 switches 309 and 310 is cut off by the failure 31a, and the link between the layer 2 switches 304 and 305 is cut off by the failure 31b.

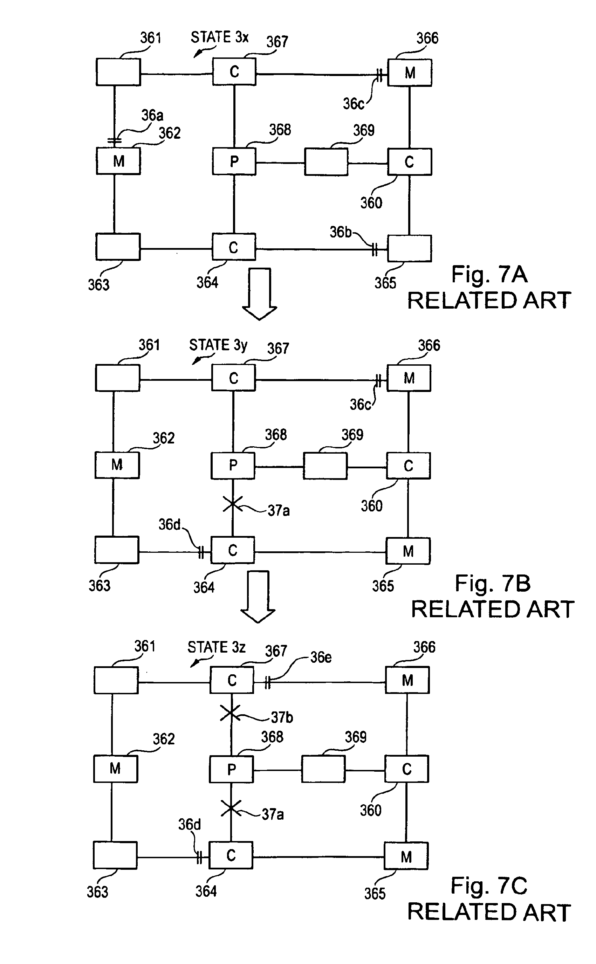

In another technique for managing a layer 2 network having a multi-ring structure, the network is managed by monitoring shared link and newly configuring a blocking port when a failure occurs in the shared link as shown in FIGS. 7A to 7C. In FIG. 7A,36a, 36b, and 36c are blocking ports.

For instance, in a state 3y shown in FIG. 7B, when a single failure 37a occurs in the link between the layer 2 switches 364 and 368, the layer 2 switch 364 creates a new blocking port 36d and manages the multi-ring network.

Further, in a state 3z shown in FIG. 7C, when failures 37a and 37b simultaneously occur in the link between the layer 2 switches 364 and 368 and in the link between the layer 2 switch 368 and 367, two new blocking ports 36d and 36e are created and the ring is divided into parts. As a result, the layer 2 switches 361, 362, 363, and 367 are not able to recover the communication paths to layer 2 switches 360, 364, 365, 366, 368 and 369.

Patent Document I discloses a data relay apparatus that relays data in a network that shares a part of a plurality of rings and avoids occurrence of a loop path by providing a block in each of the rings. The data relay apparatus transmits a failure notification packet only to a predetermined redundant ring, when a failure is detected in a shared portion of a ring, and sets a block that cuts off a main signal by passing through a control packet at a port where the failure is detected. In other words, in a multi-ring network of which a plurality of rings share a part, when a failure occurs in the shared portion, the data relay apparatus in the shared portion can recover the failure without forming a super loop, by selecting a ring as an initial primary ring, blocking a port on the side where the failure has occurred, and transmitting a trap packet that notifies the failure only to the primary ring. The technique disclosed in Patent Document 1 newly sets blocking ports, as described with reference to FIGS. 7A to 7C.

WO 03/077459 discloses a method for use in a network topology comprising a plurality of rings each having a plurality of bridges, wherein one of the plurality of bridges in each ring serves as a master bridge for the ring. The master bridge has a convertible port which is convertible between a non-blocking state and a blocking state. The method comprises regularly transmitting control packets from the master bridge onto the ring, and if any of the control packets is not received by the convertible port for the master bridge within a set delay time from transmission of the control packet, converting the convertible port for the master bridge from the blocking state to the non-blocking state.

### [Patent Document 1]

Japanese Patent Kokai Publication No. JP2006-279279A

### SUMMARY

The following is an analysis of the related art by the present inventor.

The ring protocol managements method which have been described with reference to FIGS.6A to 6C and FIGS.7A to 7C have the following problems.

The first problem is that, when the failures 31a and 31b occur simultaneously as shown in FIG. 6C, the paths of the layer 2 network cannot be recovered since the rings are managed as an arc.

In the technique shown in FIGS. 7A to 7C, when the failures 37a and 37b occur, the path of the layer 2 network cannot be recovered, as shown in FIG. 7C.

The second problem is that, in the technique shown in FIGS. 7A to 7C, since blocking ports are newly provided, the amount of change in paths tends to become large, and it is difficult to grasp the paths of the layer 2 network.

In Patent Document I, a blocking port is added after a failure has occurred. Adding a blocking port introduces a change in the network configuration and in the state of topology, and hence complicates the management process. Further, in Patent Document 1, if failures and recoveries are repeated, it will be impossible to predict the eventual state of the blocking ports.

Accordingly, it is an object of the present invention to provide a switch node, network system, and management method therefor capable of recovering a path when a link failure occurs in a multi-ring network.

The present invention, which seeks to solve one or more of the above problems, is configured as follows.

The present invention is defined in the independent claims. The dependent claims define advantageous embodiments thereof.

According to a first aspect of the present invention, there is provided a method for managing a ring network which includes a plurality of ring domains. The method comprises:
a switch node managing a shared link shared by a plurality of ring domains (for example, first and second ring domains); and
when the switch node detects a failure in the shared link, the switch node instructing the plurality of ring domains first and second ring domains) sharing the shared link to make at least one ring domain (for example, a first ring domain) expand to another ring domain (for example, a second ring domain). The one ring domain and the another ring domain form an expanded ring.

In the present invention, there are provided the switch nodes that manage the shared link on both ends of the shared link shared by the plurality of ring domain. The switch nodes each monitor the shared link to detect whether or not a failure has occurred in the shared link.

In the present invention, in the plurality of ring domains, the locations of blocking ports are preset. A master node of each ring domain manages the location of each blocking port. No new blocking port is created. The locations of the blocking ports are kept unchanged when the ring domain is expanded.

In the present invention, a ring domain expands to another ring domain, based on priority given to the plurality of ring domains sharing the shared link, when a failure is detected in the shared link. A ring domain of relatively higher priority out of the plurality of ring domains sharing the shared link manages the shared link. The ring domain of relatively lower priority (for example, a first ring domain) expands to a ring domain of relatively higher priority (for example, a second ring domain) when a failure is detected in the shared link.

In the present invention, when the switch node that manage the shared link detects a failure in the shared link, the switch node transmitting a trap that notifies a failure in the shared link to a ring domain of relatively higher priority.

In the present invention, when a master node of the ring domain receives a trap that notifies a failure in the shared link from the switch node that manages the shared link, the master node creates an expanded ring domain, in accordance with ring domain information included in the trap. The master node of the ring domain transmits a flush packet, which is transmitted on occurrence of a ring domain failure, to the ring domain in which the master node is included, to demand path change within the ring network.

In the present invention, a transit node, on receipt of a trap that notifies a failure in the shared link from the switch node that manages the shared link, creates an expanded domain in accordance with information included in the trap. The transit node performs path change thereafter, when the transit node receives the flush packet.

According to another aspect of the present invention, there is provided a ring network system which comprises:
a plurality of ring domains; and
a switch node that manage a shared link shared by a plurality of ring domains (for example, first and second ring domains). When the switch node detects a failure in the shared link, the switch node instructs the plurality of ring domains that share the shared link (for example, first and second ring domains) to make at least one ring domain (for example, a first ring domain) expand to another ring domain (for example, a second ring domain). The one ring domain and another ring domain form an expanded ring.

In the system according to the present invention, there are provided the switch nodes that manage the shared link on both ends of the shared link shared by the plurality of ring domains. The switch nodes each monitor the shared link to detect whether or not a failure has occurred in the shared link.

In the system according to the present invention, each of the ring domains includes a master node. In the plurality of ring domains, the locations of blocking ports are preset. The locations of blocking ports are managed by the master nodes of ring domains, respectively. No new blocking port is created and the locations of blocking ports are kept unchanged when the ring domain is expanded. In the present invention, a ring domain is made expanded to another ring domain based on priority given to the plurality of ring domains that constitute the shared link. In the present invention, a ring domain of relatively higher priority out of the plurality of ring domains that share the shared link manages the shared link. A ring domain of relatively lower priority (for example, a first ring domain) may be made expanded to a ring domain of relatively higher priority (for example, a second ring domain).

In the present invention, when the switch node that manages the shared link detects a failure in the shared link, the switch node transmits a trap that notifies a failure in the shared link to a ring domain of relatively higher priority.

In the present invention, when a master node of the ring domain receives a trap that notifies a failure in the shared link from the switch node that manages the shared link, the master node creates an expanded domain in accordance with ring domain information included in the trap, and transmits a flush packet, which is transmitted on occurrence of a ring domain failure, to the ring domain in which the master node is included to demand path change within the ring network.

In the present invention, a transit node, on receipt of the trap that notifies a failure in the shared link from the switch node that manages the shared link creates an expanded domain according to information included in the trap, and performs path change thereafter if the transit node receives a flush packet which is transmitted on occurrence of a ring domain failure.

According to the present invention, there is provided a switch node, located on an end of a link shared by ring domains, that monitors the shared link and controls so that at least one ring domain out of a plurality of ring domains that constitute the shared link expands to another ring domain when the switch node detects a failure in the shared link. In the present invention, the switch node transmits a trap that notifies a failure in the shared link to a ring domain of relatively higher priority.

According to the present invention, even when multi-link failures occur in a multi-ring network of a layer 2 network, layer 2 paths can be recovered by switching paths as long as the layer 2 paths still exist.

### BRIEF DESCRIPTION OF THE DRAWINGS

FIGS. 1A to 1G are diagrams for explaining an exemplary embodiment of the present invention.
FIG. 2 is a diagram for explaining an exemplary embodiment of the present invention.
FIG. 3 is a flowchart for explaining the operation of an exemplary embodiment of the present invention.
FIG. 4 is a flowchart for explaining the operation of an exemplary embodiment of the present invention.
FIG. 5 is a flowchart for explaining the operation of an exemplary embodiment of the present invention.
FIGS. 6A to 6C are diagrams for explaining a related art.
FIGS. 7A to 7C are diagrams for explaining a related art.

### PREFERRED MODES OF THE INVENTION

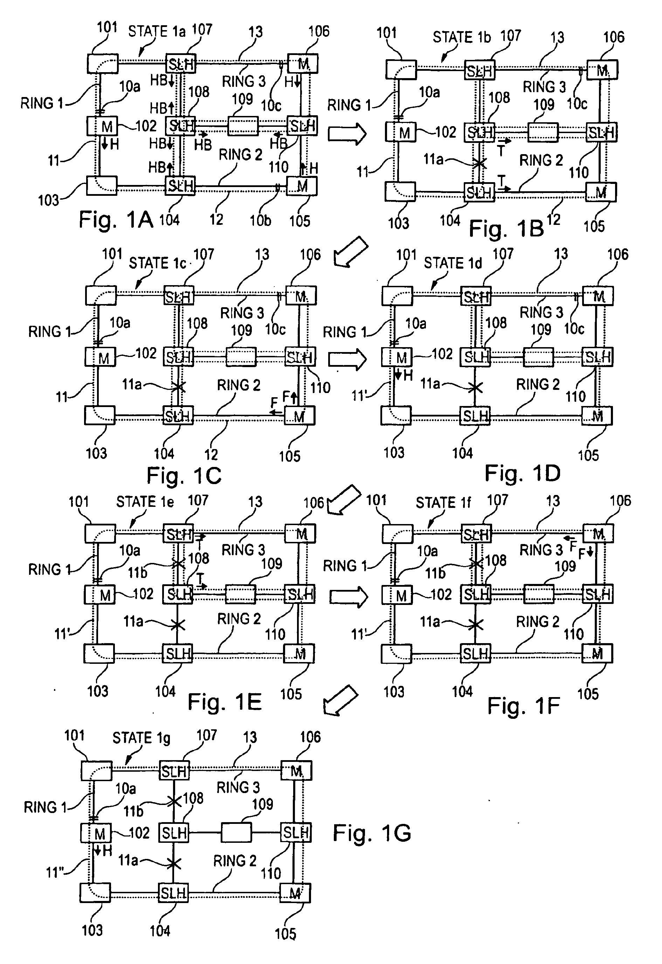

In the present invention, ring domains each are managed in a ring, not in an arc. For instance, in a state 1a in FIG. 1A, layer 2 switches located in both ends of a shared link are defined as "SLH (Shared Link Holder)" that manage the shared link.

When the SLH detects a failure in the shared link, the SLH transmits a massage to expand the domain to any one of ring domains.

The layer 2 switch, on receipt of a flush packet which is transmitted at a time of recovery from the link failure, deletes the expanded domain.

The layer 2 switch, on receipt of the message to expand a domain from the SLH, expands the domain.

According to the present invention, in a multi-ring network including a layer 2 network, even when multiple link failures occur, communication paths can be maintained by securing layer 2 paths and switching paths. While the configuration of the links depends on the number of closed paths, the links can be configured freely. The priority of the links can be set freely as well. A master mode can freely set one of opposing switches as a blocking port, however, no blocking port is newly created after a failure has occurred and there is no need for changing blocking ports.

FIGS. 1A to 1G are diagrams for explaining a multi-ring network of a layer 2 network according to an exemplary embodiment of the present invention.

In FIG. 1A, the layer 2 network is composed by following three rings (ring domains):
a ring (ring domain) 1 constituted by layer 2 switches 101, 102, 103, 104, 107, and 108;
a ring (ring domain) 2 constituted by layer 2 switches 104, 105, 108, 109, and 110; and
a ring (ring domain) 3 constituted by layer 2 switches 106, 107, 108, 109, and 110. Although FIGS. 1A to 1G each show an example of a configuration having three ring domains, it should be noted that the present invention is not limited to this configuration. Furthermore, any number of layer 2 switches can be used in the present invention.

The layer 2 switch group constituting the ring 1 belongs to a ring domain 11.

The layer 2 switch group constituting the ring 2 belongs to a ring domain 12.

The layer 2 switch group constituting the ring 3 belongs to a ring domain 13.

In each ring domain, there is provided a master node (M) that manages the respective ring domain. The master nodes in the ring domains 11, 12, and 13 are the layer 2 switches 102, 105 and 106 respectively.

The layer 2 switches 104 and 108 belong to both the ring domains 11 and 12 and are configured as the SLHs (Shared Link Holders) that manage a link shared by the ring domains 11 and 12.

The layer 2 switches 107 and 108 belong to both the ring domains 11 and 13 and are configured as the SLHs that manage a link shared by the ring domains 11 and 13.

The layer 2 switches 108, 109, and 110 belong to both the ring domains 12 and 13.

The layer 2 switches 108 and 110 are configured as the SLHs that manage a link shared by the ring domains 12 and 13. The configuration information of the layer 2 multi-ring network described above may be transferred to each layer 2 switch from the storing means of a predetermined node (layer 2 switch).

The SLHs managing the same shared link transmit a heartbeat message (transmitted as a control packet) to each other and monitors whether or not any failure has occurred in the shared link. The layer 2 switches located on both ends of a shared link (for instance the layer 2 switches 108 and 110) are configured as the SLHs. The normality of the shared link is monitored by having the SLHs transmit the heartbeat message to each other.

When the SLHs detect a failure in the shared link due to the timeout of the heartbeat message or the link down of the shared link, the SLHs perform control to expand one of the ring domains to another ring domain (FIG. 1D). In FIG. 1D, upon the occurrence of a failure 11a in the link between the SLHs 104 and 108, the ring domain 11 is made expanded to the ring domain 12.

Further, if another failure 11b occurs in the state 1d (refer to FIG. 1E), by similarly expanding the ring domain, all the ring domains can be managed as a single ring (refer to FIG. 1G). In FIG. 1G, the layer 2 switches 101, 102, 103, 104, 105, 110, 109, 106, and 107 constitute a single ring domain.

In the present example, the control over the ring network can be maintained against any pattern of link failures since the ring configuration is redefined by expanding the ring domains when a link failure occurs in the shared link.

Further, in the present exemplary embodiment, since the position of the blocking port is managed by the initially set master node (M) of each ring domain, the position of the blocking port remains unchanged, no matter how the ring domains are expanded, and the path information is easily graspable. In other words, in the present exemplary embodiment, since no blocking port is newly created, it is possible to grasp the position of the blocking port even during the occurrence of a failure. As a result, backup path design can be simplified and the cost of managing the network topology can be reduced.

In each ring domain, one master node (M) that manages the respective ring domain is provided.

The master node (M) in each ring domain monitors the state of the ring using a health check packet, and when a ring is formed, the master node avoids formation of a network loop by blocking one of the ports of the ring.

In FIG. 1, the layer 2 switches 102, 105 and 106 become master nodes of the ring domains 11, 12 and 13, respectively.

The layer 2 switch 102, the master node of the ring domain 11, sets up a block 10a at a port on the side of the layer 2 switch 101. The layer 2 switch 102 periodically transmits a health check packet in the ring domain 11.

The layer 2 switch 105, the master node of the ring domain 12, sets up a blocking port. 10b on the side of the layer 2 switch 104. The layer 2 switch 105 periodically transmits a health check packet in the ring domain 22.

The layer 2 switch 106, the master node of the ring domain 13, sets up a blocking port 10c on the side of the layer 2 switch 107. The layer 2 switch 106 periodically transmits a health check packet in the ring domain 13.

The other layer 2 switches 101, 103, 104, 107, 108, 109, and 110 are transit nodes.

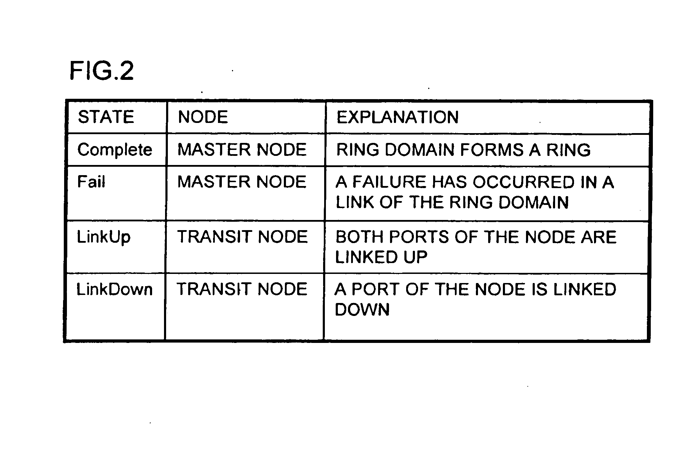

In each ring domain, the master node and transit nodes (nodes that are not the master node) respectively manage the following states shown in FIG. 2 for each ring domain, with the states being changes according to circumstances.
"Complete" (for the master node): a state in which the ring domain is formed in a ring.
"Fail" (for the master node); a state in which a failure has occurred in any link of the ring domain.
"LinkUp" (for the transit nodes): a state in which both of its own ports (ports for connection between switches) of the transit node are linked up.
"LinkDown" (for the transit nodes): a state in which one of its own ports (one of ports for connection between switches) of the transit node is linked down.

The layer 2 switches 104 and 108 belong to both the ring domains 11 and 12 and are configured as the SLHs that manage the link shared by the ring domains 11 and 12.

The layer 2 switches 107 and 108 belong to both the ring domains 11 and 13 and are configured as the SLHs that manage the link shared by the ring domains 11 and 13.

The layer 2 switches 108, 109, and 110 belong to both the ring domains 12 and 13.

The layer 2 switches 108 and 110 are configured as the SLHs that manage the link shared by the ring domains 12 and 13.

The SLHs transmit the heartbeat message to each other over the shared link and monitors whether or not any failure has occurred in the shared link.

The layer 2 switches 104, 107, 108, 109, and 110 each on the shared links determine which ring domain manages the shared link according to the priority of the ring domain.

In the present exemplary embodiment, between the ring domains 11 and 12, it is assumed that the ring domain 12 has a higher priority. Therefore, it is determined that the shared link between the layer 2 switches 104 and 108 is managed by the ring domain 12.

When the failure 11a occurs in the shared link between the layer 2 switches 104 and 108 (refer to the "×"-marked section in FIG. 1B), the layer 2 switches 104 and 108 notify only the ring domain 12, which manages the shared link, of the failure in the shared link as a trap (T). At this time, the layer 2 switches 104 and 108 do not transmit the trap notifying the failure in the shared link to the ring domain 11.

When the layer 2 switch 105 receives the trap (T) of link failure from the layer 2 switch 104, the layer 2 switch 105 cancels the block state 10b set up at a port on the side of the layer 2 switch 104 (refer to FIG. 1A).

In order to demand path change, the layer 2 switch 105 flushes its MAC (Media Access Control) table. The layer 2 switch 105 transmits flush packets (F), issued upon the occurrence of a failure, to the ring domain 12 in order to flush its MAC table (F1G. 1C). The flush packet instructs the layer 2 switch that has received it to initialize a MAC table in the layer 2 switch. The layer 2 switch that has received the flush packet initializes its MAC table.

The layer 2 switches 104, 105, 108, 109, and 110 constituting the ring domain 12 which has the link between the layer 2 switches 104 and 108 shared with ring domain 11, on receipt of the trap (T) notifying the failure 11 a in the shared link between the layer 2 switches 104 and 108, create newly an expanded ring domain 11' (refer to FIG. 1D). The ring domain 11' includes layer 2 switches 101, 102, 104, 105, 110, 109, 108 and 107.

After the failure 11a in the shared link between the layer 2 switches 104 and 108 has occurred, the health check packet for the expanded ring domain 11' transmitted by the layer 2 switch 102 travels through the layer 2 switches 103, 104, 105, 110, 109, 108, 107, and 101, and returns to the layer 2 switch 102 (refer to FIG. 1D), which results in an expanded ring domain 11'.

After the failure 11a in the shared link between the layer 2 switches 104 and 108 has occurred and the ring domain 11 has been expanded to the ring domain 11' to cover (include) ring domain 12 (refer to FIG. 1D), the layer 2 switches 108, 109, and 110 belong to both the ring domains 11 and 13.

After the failure 11a in the shared link between the layer 2 switches 104 and 108 has occurred and the ring domain 11 has been expanded to the ring domain 12 (refer to FIG. 1D) to provide the expanded ring domain 11', the layer 2 switches 108, 109; and 110 determine again which ring domain manages the link shared by the ring domains 11' and 13 according to the priority of the ring domains.

As described, the network is redefined as a network constituted by two rings: the ring domains 11' and 13.

From this state, as shown in FIG. 1E, when the failure 11b occurs in the shared link between the layer 2 switches 107 and 108, the ring domain 11' is similarly expanded to cover the ring domain 13. When the failure 11b occurs in the shared link between the layer 2 switches 107 and 108 (refer to the "×"-marked section in FUG. 1E), the layer 2 switches 107 and 108 notify the ring domains 13 and 11', which manage the shared link, of the failure in the shared link as a trap (T).

When the layer 2 switch 106 in the ring domain 13 receives the trap (T) notifying a link failure from the layer 2 switch 107, the layer 2 switch 106 cancels the block state 10c set up at the port on the side of the layer 2 switch 107 (refer to FIG. 1A).

In order to demand path change, the layer 2 switch 106 flushes its MAC (Media Access Control) table, and transmits the flush packets (F), issued upon the occurrence of a failure, to the ring domain 13 in order to flush the MAC tables (FIG. 1F). In FIG. IF, the layer 2 switch 106 is transmitting the flush packets (F) to the layer 2 switches 107 and 110.

The states of the layer 2 switches 106, 107, 108, 109, and 110 are changed to states in which they belong to a further expanded ring domain 11" (refer to FIG. 1G). The paths can be controlled as described.

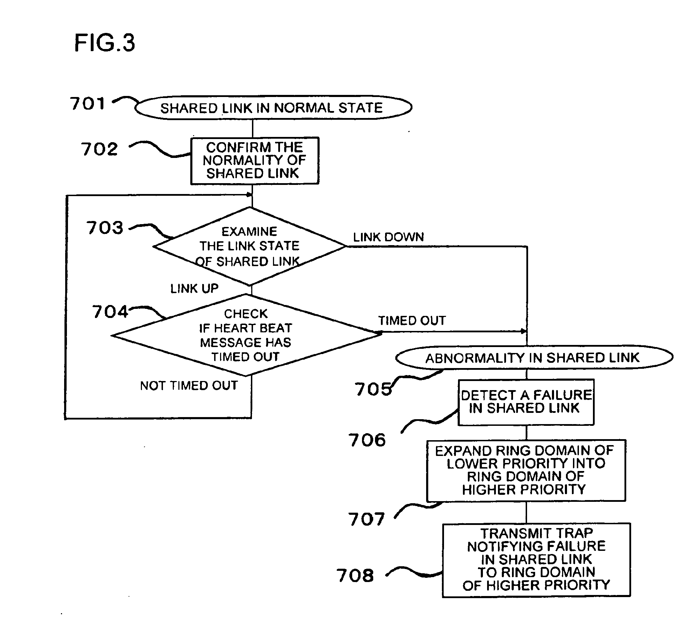

The operation of the SLH in the present exemplary embodiment, described with reference to FIGS. 1A to 1G, will be described with reference to a flowchart shown in FIG. 3.

As shown in FIG. 3, when the shared link is in a normal state (701), the SLHs confirm the normality of the shared link (702). In other words, the SLHs examine the link state of the shared link (703) and check the state of the shared link using the heart beat message (704).

As a result of the examination by the SLHs, when an abnormality, such as a link down or the timeout of a heart beat message, occurs in the shared link (705), the SLHs detects a failure in the shared link (706) and the SLHs expand the ring domain of lower priority (out of the ring domains sharing the shared link) to cover the ring domain of higher priority (707). Further, the SLHs transmit a trap notifying the failure in the shared link to the other layer 2 switches in order to expand the ring domain (708). At this time, the SLHs transmit the trap (T) notifying the failure in the shared link to the ring domain of higher priority.

The above procedure performed by each SLH may well be implemented by a computer program executed on a compute (CPU) in the SLH.

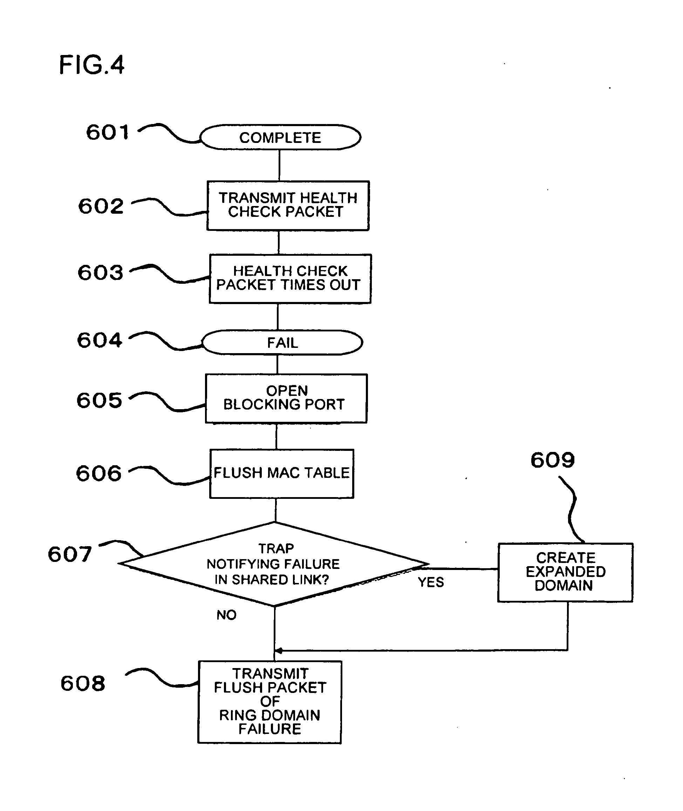

Next, the operation of the master node that has received the trap notifying the failure in the shared link in the present exemplary embodiment will be described with reference to a flowchart shown in FIG. 4.

Before the failure has occurred, the master node is in the "Complete" state (601). After the failure has occurred, the health check packet transmitted (602) times out (603), and the state of the master node changes to the "Fail" state (604).

Then the master node opens a blocking port set up by the master node itself (605) and performs path change (the initialization of the MAC tables) (606). When the failure has occurred in the shared link, the master node receives a trap (T) notifying the failure in the shared link.

In the case where the master node receives the trap ("YES" in 607), the master node expands the ring domain according to ring domain information included in the trap (609).

Then, in order to bring the paths within the ring domains into a normal state, the master node transmits the flush packet (608), issued upon the occurrence of a failure in the ring domain, and changes the paths within (or via) the rings. When the master node does not receive the trap ("NO" in 607), the master node transmits the flush packet (608).

The above procedure performed by the master node may be implemented by a computer program executed on a computer (CPU) of the master node.

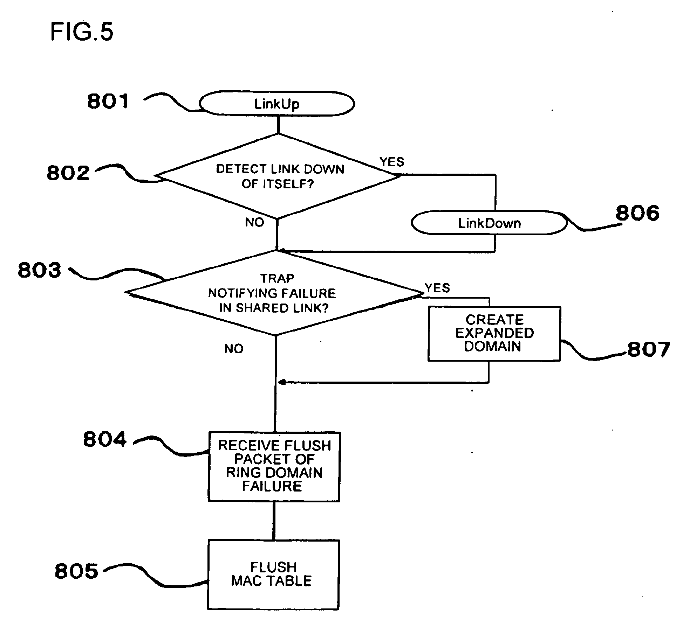

Next, the operation of the transit nodes, which have received the trap notifying the failure in the shared link, in the present exemplary embodiment will be described with reference to a flowchart shown in FIG. 5.

Since the transit nodes are not directly involved in the ring path control, the state of the transit nodes does not matter. The transit node in the "LinkUp" state (801) changes to the "LinkDown" state (806) when it detects a link down on itself.

Whether in the "LinkUp" or "LinkDown" state, the transit node checks if the trap notifying the failure in the shared link (803) has been received. When the trap is received by the transit node, the transit node expands the domain according to the information included in the trap (807).

Thereafter, the transit node receives the flush packet (issued upon the occurrence of a failure) transmitted from the master node (804), flushes the MAC table (805), and performs path change.

The above procedure performed by the transit node may be implemented by a computer program executed on a computer (CPU) of the transit node.

According to the present exemplary embodiment, the expansion of the ring domains can be controlled by having the SLHs, the master nodes, and the transit nodes operate as described.

As described above, the present exemplary embodiment has the following benefits.

Upon the occurrence of any pattern of link failures in the layer 2 multi-ring network, the path can be recovered by expanding an existing ring domain and adjusting to a newly created ring network, as long as layer 2 paths exist.

When the path control is performed, any one or more of the existing blocking ports are put into either a blocking or transfer state, Therefore the position of the blocking ports remains unchanged, and the path state of the layer 2 ring network upon the occurrence of a failure is easily graspable.

The present invention can be applied to layer 2 switches constituting a multi-ring network or to a network apparatus such as a router.

It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.
An exemplary embodiment of the present invention is to provide a method capable of recovering a layer 2 path when a link failure occurs in a layer 2 multi-ring network as long as the layer 2 path still exists. Ring domains are managed in ring forms; layer 2 switches located on both ends of a link shared by a plurality of the ring domains monitor the shared link; and one of the ring domains sharing the shared link expands to another ring domain when a failure is detected in the shared link. The locations of blocking ports are managed by an initially configured master node in each ring domain, and the locations of the blocking ports remain unchanged when the ring domain is expanded.

## Claims

1. A method for managing a ring network which includes a plurality of ring domains (11, 12, 13), the method comprising:
a switch node (104, 107, 108, 110) managing a shared link shared by a plurality of ring domains (11, 12, 13); and
when the switch node (104, 107, 108, 110) detects a failure in the shared link (706), the switch node (104, 107, 108, 110) instructing the plurality of ring domains (11, 12, 13) sharing the shared link to make at least one ring domain thereof expand to another ring domain thereof (707), the one ring domain and another ring domain forming an expanded ring (11', 11");
wherein the switch nodes (104, 107, 108, 110) that manage the shared link are provided on both ends of the shared link shared by the plurality of ring domains (11, 12, 13);
the switch nodes (104, 107, 108, 110) which manage the same shared link transmitting a heartbeat message to each other, and
the switch nodes (104, 107, 108, 110) each monitoring the shared link to detect based on the heartbeat message whether or not a failure has occurred in the shared link;
wherein each of the ring domains (11, 12, 13) includes a master node (102, 105, 106);
wherein, when the switch node (104, 107, 108, 110) that manages the shared link detects a failure in the shared link, the switch node (104, 107, 108, 110) transmits a trap (708) that notifies a failure in the shared link to a ring domain of relatively higher priority;
when a master node (102, 105, 106) of the ring domain receives the trap that notifies a failure in the shared link from the switch node (104, 107, 108, 110) that manages the shared link, the master node (102, 105, 106) creating an expanded ring domain, in accordance with ring domain information included in the trap; and
the master node (102, 105, 106) of the ring domain transmitting a flush packet (608), which is transmitted on occurrence of a ring domain failure, to the ring domain in which the master node (102, 105, 106) is included, to demand path change within the ring network.

2. A ring network system comprising:
a plurality of ring domains (11, 12, 13); and
a switch node (104, 107, 108, 110) that manage a shared link shared by a plurality of ring domains (11, 12, 13);
wherein, when the switch node (104, 107, 108, 110) detects a failure in the shared link, the switch node (104, 107, 108, 110) instructs the plurality of ring domains (11, 12, 13) that share the shared link to make at least one ring domain thereof expand to another ring domain thereof, the one ring domain and another ring domain forming an expanded ring (11', 11");
wherein the switch nodes (104, 107, 108, 110) that manage the shared link are provided on both ends of the shared link shared by the plurality of ring domains (11, 12, 13);
the switch nodes (104, 107, 108, 110) which manage the same shared link are adapted to transmit a heartbeat message to each other; and
the switch nodes (104, 107, 108, 110) each monitoring the shared fink to detect based on the heartbeat message whether or not a failure has occurred in the shared link;
wherein each of the ring domains (11, 12, 13) includes a master node (102, 105, 106);
wherein, when the switch node (104, 107, 108, 110) that manages the shared link detects a failure in the shared link, the switch node (104, 107, 108, 110) transmits a trap (708) that notifies a failure in the shared link to a ring domain of relatively higher priority;
when a master node (102, 105, 106) of the ring domain receives the trap that notifies a failure in the shared link from the switch node (104, 107, 108, 110) that manages the shared link, the master node (102, 105, 106) creating an expanded ring domain, in accordance with ring domain information included in the trap; and
the master node (102, 105, 106) of the ring domain transmitting a flush packet (608), which is transmitted on occurrence of a ring domain failure, to the ring domain in which the master node (102, 105, 106) is included, to demand path change within the ring network.

3. The method for managing a ring network as defined in claim 1, wherein in the plurality of ring domains (11, 12, 13), the locations of blocking ports (10a, 10b, 10c) are preset, the method comprising
the master node (102, 105, 106) of each ring domain managing the location of each blocking port (10a, 10b, 10c),
no new blocking port being created,
the locations of the blocking ports (10a, 10b, 10c) being kept unchanged when the ring domain is expanded.

4. The method for managing a ring network as defined in claim 1 or 3, further comprising:
a ring domain expanding to another ring domain, based on priority given to the plurality of ring domains (11, 12, 13) that share the shared link, when a failure is detected in the shared link (706).

5. The method for managing a ring network as defined in claim 1, 3 or 4, further comprising:
a ring domain of relatively higher priority out of the plurality of ring domains (11, 12, 13) that share the shared link managing the shared link; and
the ring domain of relatively lower priority expanding to a ring domain of relatively higher priority (707) when a failure is detected in the shared link (706).

6. The ring network system as defined in claim 2, wherein in the plurality of ring domains (11, 12, 13), the locations of blocking ports (10a, 10b, 10c) are preset, and the locations of blocking ports (10a, 10b, 10c) are managed by the master nodes (102, 105, 106) of ring domains, respectively, no new blocking port being created,
the locations of blocking ports (10a, 10b, 10c) being kept unchanged when the ring domain is expanded.

7. The ring network system as defined in claim 2 or 6, wherein, when a failure is detected in the shared link, a ring domain is made expanded another ring domain, based on priority given to the plurality of ring domains that share the shared link.

8. The ring network system as defined in claim 2, 6 or 7, wherein a ring domain of relatively higher priority out of the plurality of ring domains (11, 12, 13) that share the shared link manages the shared link, and
when a failure is detected in the shared link, a ring domain of relatively lower priority is made expanded to a ring domain of relatively higher priority.

9. The method for managing a ring network as defined in claim 1, further comprising:
a transit node (101, 103, 104, 107, 108, 109, 110), on receipt of the trap that notifies a failure in the shared link from the switch node (104, 107, 108, 110) that manages the shared link, creating an expanded domain (11', 11") in accordance witch information included in the trap; and
the transit node (101, 103, 104, 107, 108, 109, 110) performing path change thereafter, when the transit node (101, 103, 104, 107, 108, 109, 110) receives the flush packet.

10. The ring network system as defined in claim 2, wherein, when a master node (102, 105, 106) of the ring domain receives a trap that notifies a failure in the shared link from the switch node (104, 107, 108, 110) that manages the shared link, the master node (102, 105, 106) creates an expanded domain (11', 11") in accordance with ring domain information included in the trap, and transmits a flush packet, which is transmitted on occurrence of a ring domain failure, to the ring domain in which the master node (102, 105, 106) is included to demand path change within the ring network.

11. The ring network system as defined in claim 10, wherein a transit node (101, 103, 104, 107, 108, 109, 110), on receipt of the trap that notifies a failure in the shared link from the switch node (104, 107, 108, 110) that manages the shared link creates an expanded domain (11', 11") according to information included in the trap, and performs path change thereafter if the transit node (101, 103, 104, 107, 108, 109, 110) receives a flush packet which is transmitted on occurrence of a ring domain failure.

12. A switch node (104, 107, 108, 110) which constitutes a network including a plurality of ring domains (11, 12, 13) and manages a shared link shared by a plurality of ring domains (11, 12, 13), **characterized in that** the switch nodes (104, 107, 108, 110) managing the same shared link transmit a heartbeat message to each other, the switch node (104, 107, 108, 110) monitors the shared link to detect based on the heartbeat message whether or not a failure has occurred in the shared link, and
when the switch node (104, 107, 108, 110) detects a failure in the shared link, the switch node (104, 107, 108, 110) performs control for the plurality of ring domains (11, 12, 13) that share the shared link so that at least one ring domain out of the plurality of ring domains that share the shared link, expand to another ring domain (11',11");
wherein each of the ring domains (11, 12, 13) includes a master node (102, 105, 106);
wherein the switch node (104, 107, 108, 110) transmits a trap that notifies a failure in the shared link to a ring domain of relatively higher priority when the switch node (104, 107, 108, 110) detects the failure in the shared link.

13. The switch node (104, 107, 108, 110) as defined in claim 12, wherein the switch node includes a layer-2 switch.

## Patentansprüche

1. Verfahren zum Verwalten eines Ringnetzes, welches eine Mehrzahl von Ringdomänen (11, 12, 13) enthält, wobei das Verfahren umfasst:
einen Schaltknoten (104, 107, 108, 110), welcher eine gemeinsam genutzte Verbindung verwaltet, die durch eine Mehrzahl von Ringdomänen (11, 12, 13) gemeinsam genutzt wird; und,
wenn der Schaltknoten (104, 107, 108, 110) einen Fehler auf der gemeinsam genutzten Verbindung erfasst (706), weist der Schaltknoten (104, 107, 108, 110) die Mehrzahl von Ringdomänen (11, 12, 13), welche die gemeinsam genutzte Verbindung gemeinsam nutzen, an, wenigstens eine Ringdomäne davon auf eine andere Ringdomäne davon zu erweitern (707), wobei die eine Ringdomäne und die andere Ringdomäne einen erweiterten Ring (11', 11") bilden;
wobei die Schaltknoten (104, 107, 108, 110), welche die gemeinsam genutzte Verbindung verwalten, an beiden Enden der gemeinsam genutzten Verbindung, die durch die Mehrzahl von Ringdomänen (11, 12, 13) gemeinsam genutzt wird, vorgesehen sind;
wobei die Schaltknoten (104, 107, 108, 110), welche dieselbe gemeinsam genutzte Verbindung verwalten, eine Heartbeat-Nachricht zueinander übertragen; und
wobei die Schaltknoten (104, 107, 108, 110) jeweils die gemeinsam genutzte Verbindung überwachen, um basierend auf der Heartbeat-Nachricht zu erfassen, ob ein Fehler auf der gemeinsam genutzten Verbindung aufgetreten ist oder nicht;
wobei jede der Ringdomänen (11, 12, 13) einen Masterknoten (102, 105, 106) enthält;
wobei, wenn der Schaltknoten (104, 107, 108, 110), der die gemeinsam genutzte Verbindung verwaltet, einen Fehler auf der gemeinsam genutzten Verbindung erfasst, der Schaltknoten (104, 107, 108, 110) einen Trap, der einen Fehler auf der gemeinsam genutzten Verbindung anzeigt, an eine Ringdomäne mit relativ hoher Priorität überträgt (708);
wobei, wenn ein Masterknoten (102, 105, 106) der Ringdomäne den Trap, der einen Fehler auf der gemeinsam genutzten Verbindung anzeigt, von dem Schaltknoten (104, 107, 108, 110) empfängt, der die gemeinsam genutzte Verbindung verwaltet, der Masterknoten (102, 105, 106) eine erweiterte Ringdomäne in Übereinstimmung mit Ringdomänen-Information erzeugt, die in dem Trap enthalten ist; und
wobei der Masterknoten (102, 105, 106) der Ringdomäne ein Flush-Paket, welches bei Auftreten eines Ringdomänen-Fehlers übertragen wird, an die Ringdomäne überträgt (608), in welcher der Masterknoten (102, 105, 106) enthalten ist, um eine Pfadänderung innerhalb des Ringnetzes anzufordern.

2. Ringnetz-System, umfassend:
eine Mehrzahl von Ringdomänen (11, 12, 13); und
einen Schaltknoten (104, 107, 108, 110), der eine gemeinsam genutzte Verbindung verwaltet, welche durch eine Mehrzahl von Ringdomänen (11, 12, 13) gemeinsam genutzt wird;
wobei, wenn der Schaltknoten (104, 107, 108, 110) einen Fehler auf der gemeinsam genutzten Verbindung erfasst, der Schaltknoten (104, 107, 108, 110) die Mehrzahl von Ringdomänen (11, 12, 13), welche die gemeinsam genutzte Verbindung gemeinsam nutzen, dazu anweist, wenigstens eine Ringdomäne davon auf eine andere Ringdomäne davon zu erweitern, wobei die eine Ringdomäne und die andere Ringdomäne einen erweiterten Ring (11', 11") bilden;
wobei die Schaltknoten (104, 107, 108, 110), welche die gemeinsam genutzte Verbindung verwalten, an beiden Enden der gemeinsam genutzten Verbindung, die durch die Mehrzahl von Ringdomänen (11, 12, 13) gemeinsam genutzt wird, vorgesehen sind;
wobei die Schaltknoten (104, 107, 108, 110), welche dieselbe gemeinsam genutzte Verbindung verwalten, dazu ausgelegt sind, eine Heartbeat-Nachricht zueinander zu übertragen; und
wobei die Schaltknoten (104, 107, 108, 110) jeweils die gemeinsam genutzte Verbindung überwachen, um basierend auf der Heartbeat-Nachricht zu erfassen, ob ein Fehler auf der gemeinsam genutzten Verbindung aufgetreten ist oder nicht;
wobei jede der Ringdomänen (11, 12, 13) einen Masterknoten (102, 105, 106) enthält;
wobei, wenn der Schaltknoten (104, 207, 108, 110), welcher die gemeinsam genutzte Verbindung verwaltet, einen Fehler auf der gemeinsam genutzten Verbindung erfasst, der Schaltknoten (104, 107, 108, 110) einen Trap, der einen Fehler auf der gemeinsam genutzten Verbindung anzeigt, an eine Ringdomäne mit relativ hoher Priorität überträgt (708);
wobei, wenn ein Masterknoten (102, 105, 106) der Ringdomäne den Trap, der einen Fehler auf der gemeinsam genutzten Verbindung anzeigt, von dem Schaltknoten (104, 107, 108, 110) empfängt, welcher die gemeinsam genutzte Verbindung verwaltet, der Masterknoten (102, 105,106) eine erweiterte Ringdomäne in Übereinstimmung mit Rinddomänen-Information erzeugt, die in dem Trap enthalten ist; und
wobei der Masterknoten (102, 105, 106) der Ringdomäne ein Flush-Paket, welches bei Auftreten eines Ringdomänen-Fehlers übertragen wird, an die Ringdomäne überträgt (608), in welcher der Masterknoten (102, 105, 106) enthalten ist, um eine Pfadänderung innerhalb des Ringnetzes anzufordern.

3. Verfahren zum Verwalten eines Ringnetzes nach Anspruch 1, wobei bei der Mehrzahl von Ringdomänen (11, 12, 13) die Positionen von Sperranschlüssen (10a, 10b, 10c) vorgegeben sind, wobei das Verfahren umfasst, dass
der Masterknoten (102, 105, 106) jeder Ringdomäne die Position von jedem Sperranschluss (10a, 10b, 10c) verwaltet,
wobei kein neuer Sperranschluss erzeugt wird,
wobei die Positionen der Sperranschlüsse (10a, 10b, 10c) unverändert beibehalten werden, wenn die Ringdomäne erweitert wird.

4. Verfahren zum Verwalten eines Ringnetzes nach Anspruch 1 oder 3, ferner umfassend, dass
eine Ringdomäne basierend auf einer Priorität, die durch die Mehrzahl von Ringdomänen (11, 12, 13), welche die gemeinsam genutzte Verbindung gemeinsam nutzen, vorgegeben wird, auf eine andere Ringdomäne erweitert wird, wenn ein Fehler auf der gemeinsam genutzten Verbindung erfasst wird (706).

5. Verfahren zum Verwalten eines Ringnetzes nach Anspruch 1, 3 oder 4, ferner umfassend, dass
eine Ringdomäne mit relativ hoher Priorität von der Mehrzahl von Ringdomänen (11, 12, 13), welche die gemeinsam genutzte Verbindung gemeinsam nutzen, die gemeinsam genutzte Verbindung verwaltet wird; und
die Ringdomäne mit relativ geringer Priorität auf eine Ringdomäne mit relativ hoher Priorität erweitert wird (707), wenn ein Fehler auf der gemeinsam genutzten Verbindung erfasst wird (706).

6. Ringnetz-System nach Anspruch 2, wobei bei der Mehrzahl von Ringdomänen (11, 12, 13) die Positionen von Sperranschlüssen (10a, 10b, 10c) vorgegeben sind und die Positionen von Sperranschlüssen (10a, 10b, 10c) jeweils durch die Masterknoten (102, 105, 106) der Ringdomänen verwaltet werden, wobei kein neuer Sperranschluss erzeugt wird,
wobei die Positionen der Sperranschlüsse (10a, 10b, 10c) unverändert beibehalten werden, wenn die Ringdomäne erweitert wird.

7. Ringnetz-System nach Anspruch 2 oder 6, wobei, wenn ein Fehler auf der gemeinsam genutzten Verbindung erfasst wird, eine Ringdomäne basierend auf einer Priorität, die durch die Mehrzahl von Ringdomänen, welche die gemeinsam genutzte Verbindung gemeinsam nutzen, vorgegeben ist, auf eine andere Ringdomäne erweitert wird.

8. Ringnetz-System nach Anspruch 2, 6 oder 7, wobei eine Ringdomäne mit relativ hoher Priorität von der Mehrzahl von Ringdomänen (11, 12, 13), welche die gemeinsam genutzte Verbindung gemeinsam nutzen, die gemeinsam genutzte Verbindung verwaltet, und
wobei, wenn ein Fehler auf der gemeinsam genutzten Verbindung erfasst wird, eine Ringdomäne mit relativ geringer Priorität auf eine Ringdomäne mit relativ hoher Priorität erweitert wird.

9. Verfahren zum Verwalten eines Ringnetzes nach Anspruch 1, ferner umfassend, dass
ein Durchgangsknoten (101, 103, 104, 107, 108, 109, 110) bei Empfang des Traps, der einen Fehler auf der gemeinsam genutzten Verbindung anzeigt, von dem Schaltknoten (104, 107, 108, 110), der die gemeinsam genutzte Verbindung verwaltet, eine erweiterte Domäne (11',11") in Übereinstimmung mit Information erzeugt, die in dem Trap enthalten ist; und
der Durchgangsknoten (101, 103, 104, 107, 108, 109, 110) danach die Pfadänderung durchführt, wenn der Durchgangsknoten (101, 103, 104, 107, 108, 109, 110) das Flush-Paket empfängt.

10. Ringnetz-System nach Anspruch 2, wobei, wenn ein Masterknoten (102, 105, 106) der Ringdomäne einen Trap, der einen Fehler auf der gemeinsam genutzten Verbindung anzeigt, von dem Schaltknoten (104, 107, 108, 110) empfängt, der die gemeinsam genutzte Verbindung verwaltet, der Masterknoten (102, 105, 106) eine erweiterte Domäne (11', 11") in Übereinstimmung mit Ringdomänen-Information, die in dem Trap enthalten ist, erzeugt und ein Flush-Paket, welches bei Auftreten eines Ringdomänen-Fehlers übertragen wird, an die Ringdomäne überträgt, in welcher der Masterknoten (102, 105, 106) enthalten ist, um die Pfadänderung innerhalb des Ringnetzes anzufordern.

11. Ringnetz-System nach Anspruch 10, wobei ein Durchgangsknoten (101, 103, 104, 107, 108, 109, 110) bei Empfang des Traps, der einen Fehler auf der gemeinsam genutzten Verbindung anzeigt, von dem Schaltknoten (104, 107, 108, 110), der die gemeinsam genutzte Verbindung verwaltet, eine erweiterte Domäne (11', 11") gemäß Information, die in dem Trap enthalten ist, erzeugt und danach die Pfadänderung durchführt, wenn der Durchgangsknoten (101, 103, 104, 107, 108, 109, 110) ein Flush-Paket empfängt, welches bei Auftreten eines Ringdomänen-Fehlers übertragen wird.

12. Schaltknoten (104, 107, 108, 110), welcher ein Netzwerk bildet, das eine Mehrzahl von Ringdomänen (11, 12, 13) enthält, und eine gemeinsam genutzte Verbindung verwaltet, die durch eine Mehrzahl von Ringdomänen (11, 12, 13) gemeinsam genutzt wird, **dadurch gekennzeichnet, dass** die Schaltknoten (104, 107, 108, 110), welche dieselbe gemeinsam genutzte Verbindung verwalten, eine Heartbeat-Nachricht zueinander übertragen, wobei der Schaltknoten (104, 107, 108, 110) die gemeinsam genutzte Verbindung überwacht, um basierend auf der Heartbeat-Nachricht zu erfassen, ob ein Fehler auf der gemeinsam genutzten Verbindung aufgetreten ist oder nicht,
wobei, wenn der Schaltknoten (104, 107, 108, 110) einen Fehler auf der gemeinsam genutzten Verbindung erfasst, der Schaltknoten (104, 107, 108, 110) eine Steuerung für die Mehrzahl von Ringdomänen (11, 12, 13), welche die gemeinsam genutzte Verbindung gemeinsam nutzen, derart durchführt, dass wenigstens eine Ringdomäne von der Mehrzahl von Ringdomänen, welche die gemeinsam genutzte Verbindung gemeinsam nutzen, auf eine andere Ringdomäne (11', 11") erweitert wird;
wobei jede Ringdomäne (11, 12, 13) einen Masterknoten (102, 105, 106) enthält;
wobei der Schaltknoten (104, 107, 108, 110) einen Trap, der einen Fehler auf der gemeinsam genutzten Verbindung anzeigt, an eine Ringdomäne mit relativ hoher Priorität überträgt, wenn der Schaltknoten (104, 107, 108, 110) den Fehler auf der gemeinsam genutzten Verbindung erfasst.

13. Schaltknoten (104, 107, 108, 110) nach Anspruch 12, wobei der Schaltknoten einen Layer-2-Switch enthält.

## Revendications

1. Procédé de gestion d'un réseau en anneau qui comprend une pluralité de domaines d'anneau (11, 12, 13), le procédé consistant en ce que :
un noeud de commutateur (104, 107, 108, 110) gérant une liaison partagée qui est partagée par une pluralité de domaines d'anneau (11, 12, 13) ; et
lorsque le noeud de commutateur (104, 107, 108, 110) détecte une défaillance dans la liaison partagée (706), le noeud de commutateur (104, 107, 108, 110) ordonnant à la pluralité de domaines d'anneau (11, 12, 13) partageant la liaison partagée d'amener au moins un domaine d'anneau de celle-ci à s'étendre vers un autre domaine d'anneau de celle-ci (707), ledit domaine d'anneau et l'autre domaine d'anneau formant un anneau étendu (11', 11") ;
procédé dans lequel les noeuds de commutateur (104, 107, 108, 110) qui gèrent la liaison partagée sont prévus aux deux extrémités de la liaison partagée qui est partagée par la pluralité de domaines d'anneau (11, 12, 13) ;
les noeuds de commutateur (104, 107, 108, 110) qui gèrent la même liaison partagée transmettent un message de battement cardiaque les uns aux autres ; et
les noeuds de commutateur (104, 107, 108, 110) surveillant chacun la liaison partagée pour détecter sur la base du message de battement cardiaque si, oui ou non, une défaillance s'est produite dans la liaison partagée ;
dans lequel chacun des domaines d'anneau (11, 12, 13) comprend un noeud maître (102, 105, 106) ;
dans lequel, lorsque le noeud de commutateur (104, 107, 108, 110) qui gère la liaison partagée détecte une défaillance dans la liaison partagée, le noeud de commutateur (104, 107, 108, 110) transmet un piège (708) qui notifie une défaillance dans la liaison partagée à un domaine d'anneau de priorité relativement plus élevée ;
lorsqu'un noeud maître (102, 105, 106) du domaine d'anneau reçoit le piège qui notifie une défaillance dans la liaison partagée du noeud de commutateur (104, 107, 108, 110) qui gère la liaison partagée, le noeud maître (102, 105, 106) crée un domaine d'anneau étendu, conformément aux informations de domaine d'anneau incluses dans le piège ; et
le noeud maître (102, 105, 106) du domaine d'anneau transmet un paquet de vidage (608), qui est transmis lors de l'occurrence d'une défaillance de domaine d'anneau, au domaine d'anneau dans lequel le noeud maître (102, 105, 106) est inclus, pour demander un changement de trajet dans le réseau en anneau.

2. Système de réseau en anneau comprenant :
une pluralité de domaines d'anneau (11, 12, 13) ; et
un noeud de commutateur (104, 107, 108, 110) qui gère une liaison partagée qui est partagée par une pluralité de domaines d'anneau (11, 12, 13) ;
dans lequel, lorsque le noeud de commutateur (104, 107, 108, 110) détecte une défaillance dans la liaison partagée, le noeud de commutateur (104, 107, 108, 110) ordonne à la pluralité de domaines d'anneau (11, 12, 13) qui partagent la liaison partagée d'amener au moins un domaine d'anneau à s'étendre vers un autre domaine d'anneau de celle-ci, ledit domaine d'anneau et l'autre domaine d'anneau formant un anneau étendu (11', 11");
dans lequel les noeuds de commutateur (104, 107, 108, 110) qui gèrent la liaison partagée sont prévus aux deux extrémités de la liaison partagée qui est partagée par la pluralité de domaines d'anneau (11, 12, 13) ;
les noeuds de commutateur (104, 107, 108, 110) qui gèrent la même liaison partagée sont adaptés pour transmettre un message de battement cardiaque les uns aux autres ; et
les noeuds de commutateur (104, 107, 108, 110) surveillent chacun la liaison partagée pour détecter sur la base du message de battement cardiaque si, oui ou non, une défaillance s'est produite dans la liaison partagée ;
dans lequel chacun des domaines d'anneau (11, 12, 13) comprend un noeud maître (102, 105, 106) ;
dans lequel, lorsque le noeud de commutateur (104, 107, 108, 110) qui gère la liaison partagée détecte une défaillance dans la liaison partagée, le noeud de commutateur (104, 107, 108, 110) transmet un piège (708) qui notifie une défaillance dans la liaison partagée à un domaine d'anneau de priorité relativement plus élevée ;
lorsqu'un noeud maître (102, 105, 106) du domaine d'anneau reçoit le piège qui notifie une défaillance dans la liaison partagée du noeud de commutateur (104, 107, 108, 110) qui gère la liaison partagée, le noeud maître (102, 105, 106) crée un domaine d'anneau étendu, conformément aux informations de domaine d'anneau incluses dans le piège ; et
le noeud maître (102, 105, 106) du domaine d'anneau transmet un paquet de vidage (608), qui est transmis lors d'une occurrence d'une défaillance de domaine d'anneau, au domaine d'anneau dans lequel le noeud maître (102, 105, 106) est inclus, pour demander un changement de trajet sur dans réseau en anneau.

3. Procédé de gestion d'un réseau en anneau selon la revendication 1, dans lequel, dans la pluralité de domaines d'anneau (11, 12, 13), les emplacements de ports de blocage (10a, 10b, 10c) sont prédéterminés, le procédé consistant en ce que
le noeud maître (102, 105, 106) de chaque domaine d'anneau gère l'emplacement de chaque port de blocage (10a, 10b, 10c),
aucun nouveau port de blocage n'est créé,
les emplacements des ports de blocage (10a, 10b, 10c) sont maintenus inchangés lorsque le domaine d'anneau est étendu.

4. Procédé de gestion d'un réseau en anneau selon la revendication 1 ou 3, consistant en outre en ce que :
un domaine d'anneau s'étendant vers un autre domaine d'anneau, sur la base d'une priorité donnée à la pluralité de domaines d'anneau (11, 12, 13) qui partagent la liaison partagée, lorsqu'une défaillance est détectée dans la liaison partagée (706).

5. Procédé de gestion d'un réseau en anneau selon la revendication 1, 3 ou 4, consistant en outre en ce que :
un domaine d'anneau de priorité relativement plus élevée parmi la pluralité de domaines d'anneau (11, 12, 13) qui partagent la liaison partagée gère la liaison partagée ; et
le domaine d'anneau de priorité relativement plus faible s'étend vers un domaine d'anneau de priorité relativement plus élevée (707) lorsqu'une défaillance est détectée dans la liaison partagée (706).

6. Système de réseau en anneau selon la revendication 2, dans lequel, dans la pluralité de domaines d'anneau (11, 12, 13), les emplacements de ports de blocage (10a, 10b, 10c) sont prédéterminés, et les emplacements de ports de blocage (10a, 10b, 10c) sont gérés par les noeuds maîtres (102, 105, 106) des domaines d'anneau, respectivement, aucun nouveau port de blocage n'étant créé,
les emplacements de ports de blocage (10a, 10b, 10c) sont maintenus inchangés lorsque le domaine d'anneau est étendu.

7. Système de réseau en anneau selon la revendication 2 ou 6, dans lequel, lorsqu'une défaillance est détectée dans la liaison partagée, un domaine d'anneau est amené à s'étendre vers un autre domaine d'anneau, sur la base d'une priorité donnée à la pluralité de domaines d'anneau qui partagent la liaison partagée.

8. Système de réseau en anneau selon la revendication 2, 6 ou 7, dans lequel un domaine d'anneau de priorité relativement plus élevée parmi la pluralité de domaines d'anneau (11, 12, 13) qui partagent la liaison partagée gère la liaison partagée, et
lorsqu'une défaillance est détectée dans la liaison partagée, un domaine d'anneau de priorité relativement plus faible est étendu vers un domaine d'anneau de priorité relativement plus élevée.

9. Procédé de gestion d'un réseau en anneau selon la revendication 1, consistant en outre en ce que :
un noeud de transit (101, 103, 104, 107, 108, 109, 110), lors de la réception du piège qui notifie une défaillance dans la liaison partagée du noeud de commutateur (10A, 107, 108, 110) qui gère la liaison partagée, crée un domaine étendu (11', 11") conformément à des informations incluses dans le piège ; et
le noeud de transit (101, 103, 104, 107, 108, 109, 110) effectue un changement de trajet après cela, lorsque le noeud de transit (101, 103, 104, 107, 108, 109, 110) reçoit le paquet de vidage.

10. Système de réseau en anneau selon la revendication 2, dans lequel, lorsqu'un noeud maître (102, 105, 106) du domaine d'anneau reçoit un piège qui notifie une défaillance dans la liaison partagée du noeud de commutateur (104, 107, 108, 110) qui gère la liaison partagée, le noeud maître (102, 105, 106) crée un domaine étendu (11', 11") conformément à des informations de domaine d'anneau incluses dans le piège, et transmet un paquet de vidage, qui est transmis lors d'une occurrence d'une défaillance de domaine d'anneau, au domaine d'anneau dans lequel le noeud maître (102, 105, 106) est inclus pour demander un changement de trajet dans le réseau en anneau.

11. Système de réseau en anneau selon la revendication 10, dans lequel un noeud de transit (101, 103, 104, 107, 108, 109, 110), lors de la réception du piège qui notifie une défaillance dans la liaison partagée du noeud de commutateur (104, 107, 108, 110) qui gère la liaison partagée, crée un domaine étendu (11', 11") conformément à des informations incluses dans le piège, et effectue un changement de trajet après cela si le noeud de transit (101, 103, 104, 107, 108, 109, 110) reçoit un paquet de vidage qui est transmis lors d'une occurrence d'une défaillance de domaine d'anneau.

12. Noeud de commutateur (104, 107, 108, 110) qui constitue un réseau comprenant une pluralité de domaines d'anneau (11, 12, 13) et gère une liaison partagée qui est partagée par une pluralité de domaines d'anneau (11, 12, 13), **caractérisé en ce que** les noeuds de commutateur (104, 107, 108, 110) gérant la même liaison partagée transmettent un message de battement cardiaque les uns aux autres, le noeud de commutateur (104, 107, 108, 110) surveille la liaison partagée pour détecter sur la base du message de battement cardiaque si, oui ou non, une défaillance s'est produite dans la liaison partagée, et
lorsque le noeud de commutateur (104, 107, 108, 110) détecte une défaillance dans la liaison partagée, le noeud de commutateur (104, 107, 108, 110) effectue une commande pour la pluralité de domaines d'anneau (11, 12, 13) qui partagent la liaison partagée de sorte qu'au moins un domaine d'anneau parmi la pluralité de domaines d'anneau qui partagent la liaison partagée s'étende vers un autre domaine d'anneau (11', 11") ;
dans lequel chacun des domaines d'anneau (11, 12, 13) comprend un noeud maître (102, 105, 106) ;
dans lequel le noeud de commutateur (104, 107, 108, 110) transmet un piège qui notifie une défaillance dans la liaison partagée à un domaine d'anneau de priorité relativement plus élevée lorsque le noeud de commutateur (104, 107, 108, 110) détecte la défaillance dans la liaison partagée.

13. Noeud de commutateur (104, 107, 108, 110) selon la revendication 12, dans lequel le noeud de commutateur comprend un commutateur de couche 2.
